# EUROPEAN PATENT SPECIFICATION

(11) **EP 2 918 358 B1**
(45) Date of publication and mention of the grant of the patent: **21.06.2017**
(21) Application number: 14159171.9
(22) Date of filing: 12.03.2014
(51) Int. Cl.: B22F 3/105, B22F 3/17, B21H 1/20, B22F 5/10, B21D 22/14, B21D 35/00

(54) **Method for producing a component involving flow-forming**
Verfahren zur Herstellung eines Bauteils umfassend Fliessdrücken
Procédé de fabrication d'un composant comportant un procédé de fluotournage

(43) Date of publication of application: 16.09.2015
(73) Proprietor: Safran Landing Systems UK Ltd, Gloucester, Gloucestershire GL2 9QH (GB)
(72) Inventor: Villain-Chastre, Jean-Philippe, Cheltenham, Gloucestershire GL52 2NR (GB); Forgeoux, Germain, Cheltenham, Gloucestershire (GB); Grochola, Przemyslaw, Cheltenham, Gloucestershire GL50 1EE (GB); Foster, Nicholas, Cheltenham, Gloucestershire GL53 8BG (GB)
(74) Representative: Latham, Stuart Alexander

(56) References cited:
- WO-A1-01/91965
- WO-A1-2011/160109
- US-A- 4 899 570
- US-A- 5 208 843
- US-A1- 2002 041 819

## Description

### BACKGROUND OF THE INVENTION

Various processes are known for the production of a component. In conventional machining processes, material is predominantly removed from a work piece or preform to produce a component. Examples include milling, cutting, turning and sawing. Such processes are well established and can produce a component that has good mechanical properties and surface finish. However, conventional machining processes are often expensive, time consuming and wasteful.

Other processes are known that aim at producing near net shaped components. Additive layer manufacturing (ALM) is an example of such a process. In ALM, a component is built up in layers to create a component that can be near net shape and can include complex geometries. However, an ALM component is mechanically weak in comparison to an equivalent component that is formed from a bar, plate, forging, or by casting or sintering, due to the porosity of the ALM component.

It is therefore common to perform a dedicated mechanical enhancement process, such as heat treatment, on an ALM produced component. Such mechanical enhancement processes can however significantly increase the cost associated with producing the component.

WO 2011/160109 A1 discloses a system and method for the manufacture of aircraft landing gear axle equipment. The process is provided of two primary steps: hot pierce and tube solid billet stock; and flow form process. The hot pierce and tube process converts a standard solid round billet by heating it well beyond its annealing temperature. The billet is then pierced with a lance and hot rolled into a seamless tube. The tube is then precision flow formed as an incremental metal forming technique.

### SUMMARY OF THE INVENTION

A first aspect of the invention provides a method for producing a component, the method comprising:
providing a preform formed by an additive layer manufacturing (ALM) process; and
subjecting the preform to a flow forming process to form the component.

The present inventors have found that flow forming can be used to mechanically enhance an ALM preform sufficiently to remove the need for a dedicated mechanical enhancement process. This was unexpected because an ALM preform is significantly more porous and therefore mechanically weaker than an equivalent component formed from a bar, plate, forging or, by casting or sintering. Thus, the present invention enables a near net shape preform to be efficiently produced by an ALM process and subsequently elongated using a flow forming process without the need for a dedicated mechanical enhancement step for the ALM preform.

The preform can be subjected to the flow forming process without having been subjected to a dedicated mechanical enhancement process.

The providing step can include forming the preform by the ALM process.

The preform can be tubular in shape. The tube can be substantially straight sided, in some cases along a majority or the entirety of its length.

The preform can comprise metal; for example, titanium alloy, steel, stainless steel, aluminium or copper.

The component can comprise an aircraft assembly component, such as an aircraft landing gear assembly component; for example, a slider, stay or linkage.

The preform can be near net shape.

The component can be net shape or near net shape.

### BRIEF DESCRIPTION OF THE DRAWINGS

Embodiments of the invention will now be described with reference to the accompanying drawings, in which:
Figure 1 is a flow chart of a method according to an embodiment of the present invention;
Figure 2 schematically illustrates an ALM system that can be used to produce the preform; and
Figure 3 schematically illustrates an ALM preform being subjected to a flow forming process.

### DETAILED DESCRIPTION OF EMBODIMENT(S)

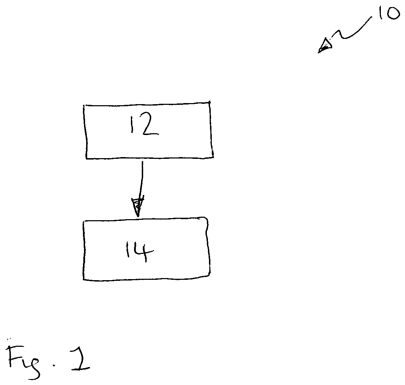

Referring to Figure 1, the method 10 according to an embodiment of the invention includes at step 12 providing a preform created or formed by an additive layer manufacturing (ALM) process. The preform can be formed by any suitable ALM process that can produce a preform capable of being subsequently subjected to a flow forming process.

The method 10 can include a step of forming the preform by the ALM process.

The preform can be tubular in shape. The tube can be substantially straight sided. The cross section, diameter and/or hydraulic diameter of the tube can be determined by the intended use; for example, in the context of an aircraft landing gear slider, the preform tube may have a circular cross section with a diameter between 40mm and 450mm. In other embodiments the tube can have a first portion of a first diameter and a second portion of a second diameter that is different to the first diameter.

Although the preform has been described as being tubular in shape, the component can in other embodiments take other forms; for example, a, disk or hoop shaped component.

The preform may comprise metal; for example, titanium alloy, steel, stainless steel, aluminium or copper.

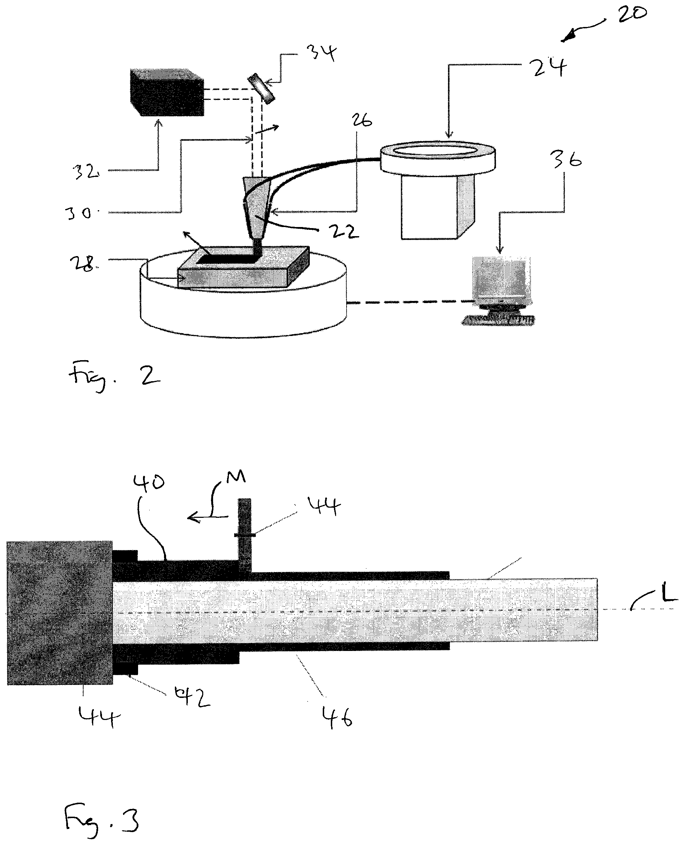

Referring additionally to Figure 2, an ALM system that can be used to form the preform is shown generally at 20. The system includes a head 22 coupled to a metal powder feed machine 24 via feed tubes 26. The position of the head 22 determines the location on a substrate 28 at which metal powder is dispensed. The head 22 also directs a laser beam 30 emitted from a laser module 32 against a mirror 34 at metal powder that has been dispensed on the substrate 28 in order to consolidate the metal powder. The system is controlled by a computer 36.

At step 12, the preform is subjected to a flow forming process to form the component. Put another way, the ALM preform is flow formed in order to produce the component. Any suitable flow forming process can be used, such as forward or reverse flow forming.

In one example, and referring additionally to Figure 3, the preform tube 40 is held by the clamps 42 of a flow forming machine 44 around a correspondingly shaped mandrel (not shown) and rotated about its longitudinal axis L. One or more cylindrical rollers 44 are moved relative to the preform tube 40 in the direction of arrow M towards the flow forming machine 44 at a distance from the longitudinal axis L that is less than the outer diameter of the tube 40 so as to elongate the tube 40 by plastic deformation in order to produce the component 46. The rolling process can be hot or cold.

The present inventors have found that flow forming can be used to mechanically enhance the ALM preform. This was unexpected because an ALM preform is significantly more porous and therefore mechanically weaker than an equivalent component that is formed from a bar, plate, forging or by, casting or sintering. Thus, the present invention enables a near net shape preform to be efficiently produced by an ALM process and subsequently elongated using a flow forming process without the need for an expensive mechanical enhancement step for the ALM preform. The method according to embodiments of the invention can therefore result in swarfless production of high tensile strength tubes with significantly reduced lead time in comparison to known methods.

In practice, the ALM preform may undergo some machining prior to being subjected to the flow forming process. Also, the flow formed component can be machined. However, the amount of machining required (if any) will generally be significantly less than would be required if the preform and/or component had been produced by a conventional subtractive manufacturing machining process.

Although the invention has been described above with reference to one or more preferred embodiments, it will be appreciated that various changes or modifications may be made without departing from the scope of the invention as defined in the appended claims. The word "comprising" can mean "including" or "consisting of" and therefore does not exclude the presence of elements or steps other than those listed in any claim or the specification as a whole.

## Claims

1. A method for producing a component, the method comprising:
providing a preform formed by an additive layer manufacturing (ALM) process; and
subjecting the preform to a flow forming process to form the component.

2. The method of claim 1, whereby the providing step includes forming the preform by the ALM process.

3. The method of any preceding claim, whereby the preform is tubular in shape.

4. The method of claim 3, whereby tube is straight sided along a majority of its length.

5. The method of any preceding claim, whereby the preform comprises metal.

6. The method of any preceding claim, whereby the component comprises an aircraft assembly component.

## Patentansprüche

1. Verfahren zum Herstellen einer Komponente, das Verfahren weist auf:
Bereitstellen einer Vorform, die mittels eines additiven Schichtherstellungs-(ALM) prozesses gebildet ist; und
Unterziehen der Vorform eines Fließdrückprozesses, um die Komponente zu bilden.

2. Verfahren nach Anspruch 1, wobei der Bereitstellungsschritt Bilden der Vorform mittels des ALM-Prozesses beinhaltet.

3. Verfahren nach einem der vorangehenden Ansprüche, wobei die Vorform röhrenförmig ist.

4. Verfahren nach Anspruch 3, wobei die Röhre geradlinig entlang einer Mehrheit ihrer Länge ist.

5. Verfahren nach einem der vorangehenden Ansprüche, wobei die Vorform Metall aufweist.

6. Verfahren nach einem der vorangehenden Ansprüche, wobei die Komponente eine Flugzeugkomponente aufweist.

## Revendications

1. Procédé de fabrication d'un composant, ledit procédé comprenant les étapes de :
fournir une ébauche obtenue grâce à un procédé de fabrication par ajout de couches supplémentaires (ALM) ; et
soumettre l'ébauche à un procédé de fluotournage pour obtenir la forme du composant.

2. Procédé selon la revendication 1, dans lequel l'étape de fourniture inclut la formation de l'ébauche par un procédé de fabrication par ajout de couches supplémentaires (ALM).

3. Procédé selon l'une quelconque des revendications précédentes, dans lequel l'ébauche a une forme tubulaire.

4. Procédé selon la revendication 3, dans lequel le tube présente des parois droites sur la plus grande partie de sa longueur.

5. Procédé selon l'une quelconque des revendications précédentes, dans lequel l'ébauche comprend du métal.

6. Procédé selon l'une quelconque des revendications précédentes, dans lequel le composant comprend un composant d'aéronef.
